# EUROPEAN PATENT SPECIFICATION

(11) **EP 4 274 214 B1**
(45) Date of publication and mention of the grant of the patent: **11.03.2026**
(21) Application number: 21916853.1
(22) Date of filing: 08.01.2021
(51) Int. Cl.: H04N 23/60, H04N 23/65, H04N 23/661, H04N 23/90, G06F 1/10, G06F 1/12

(54) **SENDING APPARATUS, DATA TRANSMISSION SYSTEM, AND DATA TRANSMISSION METHOD**
SENDEVORRICHTUNG, DATENÜBERTRAGUNGSSYSTEM UND DATENÜBERTRAGUNGSVERFAHREN
APPAREIL D'ENVOI, SYSTÈME DE TRANSMISSION DE DONNÉES ET PROCÉDÉ DE TRANSMISSION DE DONNÉES

(43) Date of publication of application: 08.11.2023
(73) Proprietor: Shenzhen Yinwang Intelligent Technologies Co., Ltd., Shenzhen, Guangdong 518129 (CN)
(72) Inventor: ZHANG, Xingxin, Shenzhen, Guangdong 518129 (CN); WANG, Xuehuan, Shenzhen, Guangdong 518129 (CN); LI, Chao, Shenzhen, Guangdong 518129 (CN)
(74) Representative: Maiwald GmbH
(86) International application number: PCT/CN2021/070972
(87) International publication number: WO 2022/147798

(56) References cited:
- CN-A- 1 491 038
- CN-A- 101 442 389
- CN-A- 102 202 030
- CN-U- 208 369 601
- US-A1- 2008 151 930
- US-A1- 2009 267 746
- US-A1- 2011 029 701
- US-B2- 8 571 124

## Description

### TECHNICAL FIELD

Embodiments of this application relate to the communications field, and in particular, to a transmitting apparatus, a data transmission system, and a data transmission method.

### BACKGROUND

With development of science and technology, intelligent vehicles (intelligent vehicle) (especially self-driving vehicles (self-driving vehicle)) have become an important development direction of the global automobile industry. Self-driving vehicles can transport passengers or goods, greatly improving travel convenience and efficiency for people. In the future, the self-driving vehicles will have great commercial values and social values.

A self-driving vehicle can sense a surrounding environment in navigation and implement self driving without human operation. Specifically, the self-driving vehicle may detect information about a vehicle location and a surrounding object by using a device such as an acoustic wave radar, a laser radar, a navigation system, an odometer, an accelerometer, or a camera.

The camera is used as an example. Image data captured by the camera is transmitted to a multiple domain controller (multiple domain controller, MDC) by using a transmission system as an input of self driving. The camera can also transmit the image data to a cockpit domain controller (cockpit domain controller, CDC) and display an image on a large screen inside the vehicle. This helps people in the vehicle observe surroundings of the vehicle and proactively intervene in vehicle control in a specific situation.

In some scenarios, the camera may be required to transmit the image data to a plurality of high-performance computing platforms (high-performance computing platform, HCP) (such as an MDC and a CDC), that is, the camera is required to be connected to a plurality of HCP devices. The camera is a transmitting end, and an HCP device is a receiving end.

When the camera is connected to the plurality of HCP devices, a plurality of chips need to be set in the camera, and each chip is connected to one HCP. The plurality of chips occupy an excessively large volume in the camera, and power consumption of the plurality of chips is high.

Therefore, reducing a quantity of transmitting apparatuses in a data transmission device and reducing a volume proportion and power consumption of a chip in the device are technical problems that need to be resolved.
Document US 2008/151930 A1 describes an integrated switch and a data transmission method using a circuit having a digital signal processing module receiving an information signal from a media access controller (MAC), where the module outputs a processed signal. Two analog front ends (AFE) have communication ports. A switch receives the processed signal, where the switch selectively forwards the processed signal to one of the AFEs or another AFE based on establishment of communication link at one of the communication ports or another communication port. The latter AFE detects the communication link at the latter communication port. Document US 2011/029701 A1 describes a Physical Layer Interface for computing devices. Document US 8 571 124 B2 describes a multiple input, multiple output (MIMO) communication system over in-premises wires.

### SUMMARY

Embodiments of this application provide a transmitting apparatus, a data transmission method, and a data transmission system, to reduce a quantity of chips, and reduce a volume proportion, and power consumption of the chip in a data transmission device. The present invention is defined by the appended claims.

### BRIEF DESCRIPTION OF DRAWINGS

FIG. 1 is a schematic diagram of an architecture of a data transmission system to which an embodiment of this application is applicable;
FIG. 2 is a schematic diagram of an architecture of a data transmission system to which an embodiment of this application is applicable;
FIG. 3 is a schematic diagram of an architecture of a data transmission system to which an embodiment of this application is applicable; and
FIG. 4 is a schematic diagram of a structure of an electronic device to which an embodiment of this application is applicable.

### DESCRIPTION OF EMBODIMENTS

The following describes in detail embodiments of this application with reference to accompanying drawings.

For ease of understanding embodiments of this application, the following describes an application scenario of this application. The service scenario described in embodiments of this application is intended to describe the technical solutions in embodiments of this application more clearly, but constitutes no limitation on the technical solutions provided in embodiments of this application. Persons of ordinary skill in the art may learn that the technical solutions provided in embodiments of this application are also applicable to a similar technical problem as a new service scenario emerges.

This application is applicable to a data transmission scenario in which a sending device transmits same data to a plurality of receiving devices. In a self-driving scenario, a camera captures image data, and transmits the image data to an HCP device such as an MDC or a CDC, so that the user observes a surrounding condition of a vehicle by using the HCP device, and intervenes in vehicle control in time. Certainly, the HCP device may also transmit a control parameter to the camera, so that the camera captures image data that meets a requirement.

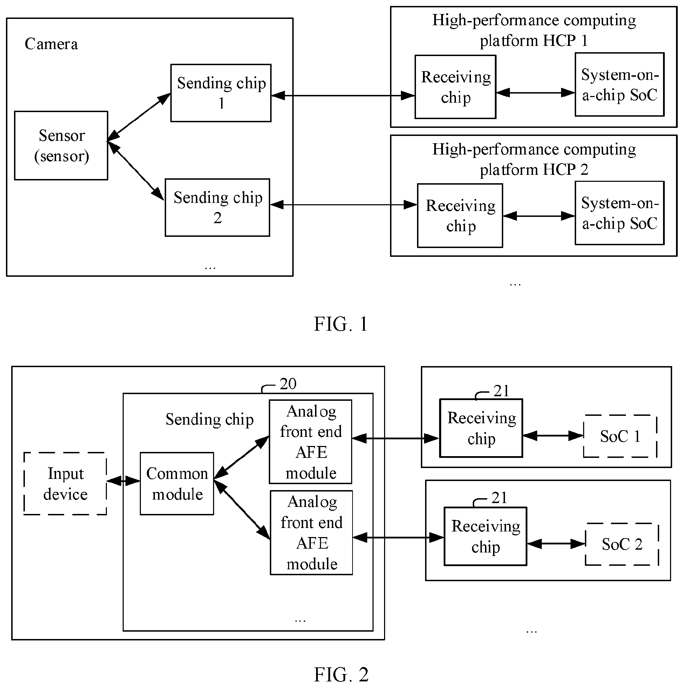

FIG. 1 is a schematic diagram of an architecture of a data transmission system. The data transmission system includes a camera and an HCP device. For example, a sensor (sensor) and a sending chip are set on a camera side. A receiving chip and a system-on-a-chip (system-on-a-chip, SoC) are set on an HCP device side. When the camera is connected to a plurality of HCP devices (for example, HCP 1 and HCP 2 in FIG. 1), a plurality of sending chips (for example, a sending chip 1 and a sending chip 2 in FIG. 1) are usually set in the camera, and each sending chip is connected to a receiving chip on the HCP device side. Such manner of disposing a plurality of sending chips causes high power consumption of the camera. In addition, when a camera installation position is limited, heat dissipation is limited, and the camera is easily damaged.

In addition, a solution that a splitter is set may be considered, and each channel of the splitter is connected to a receiving chip on the HCP device side. However, the splitter attenuates a signal. To compensate for signal attenuation, signal transmitting power needs to be increased. As a result, power consumption of the camera increases. In addition, when the HCP device transmits a control parameter backward to the camera (in an actual situation, the control parameter is transmitted through a high level and a low level). If the plurality of HCP devices transmit control parameters at the same time, the sending chips in the camera cannot identify which HCP device the control parameter comes from, and cannot correctly identify the control parameters.

Transmission from the camera to the HCP device usually uses high bandwidth, and transmission from the HCP device to the camera uses low bandwidth. In this application, transmission from the camera to the HCP device is defined as forward transmission, and transmission from the HCP device to the camera is defined as backward transmission. It may be understood that the sending chip in embodiments of this application may also be referred to as a transmitting apparatus. The sending chip and/or the transmitting apparatus may not only perform a sending action, but may also perform a receiving action. Similarly, the receiving chip and/or the receiving apparatus may not only perform a receiving action, but may also perform a sending action. Therefore, "sending" in the term sending chip and/or transmitting apparatus and "receiving" in the term receiving chip and/or receiving apparatus should not limit functions of the chip and/or the apparatus.

It is described above that the plurality of sending chips set in the camera causes high power consumption of the camera, and if a camera installation position is limited, heat dissipation is limited, and the camera is easily damaged. Based on this, the sending chip is improved in this application. The improved sending chip can be connected to a plurality of receiving chips, so that one-to-multiple data transmission can be implemented, to reduce power consumption and a volume on a sending device side.

The following describes the solutions in detail with reference to the accompanying drawings. Features or content denoted by dashed lines in the accompanying drawings may be understood as optional operations or optional structures in embodiments of this application.

First, a transmitting apparatus provided in this application is described. For details, refer to a sending chip 20 in FIG. 2. The sending chip 20 includes a common module and a plurality of analog front end AFE modules.

The common module is configured to: receive first information, process the first information to obtain second information, and send the second information to at least two of the plurality of analog front end modules separately.

The analog front end module is configured to: process the second information to obtain third information, and send the third information.

The following describes a data transmission system shown in FIG. 2 with reference to the sending chip 20 provided in this application. The system includes a sending chip 20 and at least two receiving chips 21. The sending chip 20 is connected to the receiving chip 21 in a wired manner or in a wireless manner. One analog front end module in the sending chip 20 is connected to one receiving chip, and different analog front end modules are connected to different receiving chips.

Optionally, the data transmission system further includes an input device connected to the sending chip. The input device may be a sensor in a camera, a laser radar sensor, a millimeter-wave radar, or the like.

Optionally, the data transmission system further includes a system-on-a-chip SoC connected to the receiving chip.

It is described above that the common module in the sending chip 20 processes the received first information to obtain the second information, and the common module may receive the first information sent by the input device. The first information may be image data information, or may be control information or audio data information. The processing performed by the common module on the first information may be digital processing, or may be digital processing and analog processing, for example, interleaving processing, precoding processing, and modulation processing.

It is described above that the common module in the sending chip 20 sends the second information to the at least two of the plurality of analog front end modules separately. For example, three analog front end modules are set in one sending chip, and the common module may send the second information to the three analog front end modules separately, or may send the second information to any two of the three analog front end modules, or two specified analog front end modules in the three analog front end modules.

The processing performed by the analog front end module in the sending chip 20 on the second information described above may be analog processing. An AFE is generally a set of circuits for processing an analog signal, and is configured to amplify and filter a sensitive analog signal. Generally, the analog front end module is configured to send and receive analog signals. When the analog front end module is configured to send a signal, the analog front end module maps a to-be-sent signal to a level that is set, and sends the signal that is processed through power amplification and filtering.

In the foregoing embodiment, one common module is set in the sending chip. The common module may perform centralized processing on the first information, and then distribute the first information to the plurality of independent analog front end modules, so that the plurality of analog front end modules send the first information to receiving chips connected to the plurality of analog front end modules respectively. Even if the sending device (for example, a camera) is connected to a plurality of receiving devices (for example, HCP devices), only one sending chip needs to be set in the sending device. Compared with a solution of disposing a plurality of sending chips, in this application, space occupied by the sending chip in the sending device can be reduced. In addition, compared with a solution of disposing a plurality of sending chips for processing respectively, in this application, the common module processes the collected and obtained information in a centralized manner, which can reduce power consumption of the sending device.

The following describes in detail the common module in the sending chip 20. The common module may perform digital processing on the first information from the input device, and optionally, may further perform analog processing.

In an example, the common module includes a digital module, and the digital module is configured to process the first information to obtain the second information. Optionally, processing performed by the digital module on the first information may be digital processing.

In another example, the common module includes a digital module and an analog module. The digital module is configured to: process the first information to obtain fourth information, and send the fourth information to the analog module. The analog module is configured to process the received fourth information to obtain the second information. Optionally, the digital module performs digital processing on the first information. The analog module performs analog processing on the fourth information.

The sending chip 20 provided in this application includes the plurality of analog front end modules. Data transmission on links between the plurality of analog front end modules and the receiving chips connected to the plurality of analog front end modules may not interfere with each other. However, when the plurality of links work at the same time, there may be a conflict between some requirements, for example, there may be a forward transmission clock conflict, a forward retransmission requirement conflict, or a conflict in parameter control of a same camera by a plurality of HCP devices. Based on this, to avoid a conflict, the plurality of analog front end modules may be divided into primary and secondary analog front end modules. When there is a conflict between transmission requirements of the plurality of links, a requirement of a link of the primary analog front end module is met primarily. In this application, a receiving chip connected to the primary analog front end module is referred to as a primary receiving chip, and a receiving chip connected to the secondary analog front end module is referred to as a secondary receiving chip. A link between the primary analog front end module and the primary receiving chip is referred to as a primary link, and a link between the secondary analog front end module and the secondary receiving chip is referred to as a secondary link.

For example, the plurality of analog front end modules include: one primary analog front end module, and one or more secondary analog front end modules. The primary analog front end module and the secondary analog front end module are determined in any one of the following manners:
being pre-configured; or being negotiated by the primary analog front end module and the secondary analog front end module; or being determined based on a sequence of establishing links between the analog front end modules and the receiving chips; or being determined based on priorities of the receiving chips respectively connected to the plurality of analog front end modules.

There is usually only one primary analog front end module among the plurality of analog front end modules included in the sending chip, and the other analog front end modules are secondary analog front end modules. However, a case in which the plurality of analog front end modules included in the sending chip include a plurality of primary analog front end modules is not excluded.

The following describes in detail a manner of determining the primary analog front end module and the secondary analog front end module, and other technical details.

Manner 1: Being pre-configured.

For example, before the sending chip is delivered from the factory, an administrator divides the plurality of analog front end modules into a primary analog front end module and a secondary analog front end module, and configures primary and secondary identifiers for the analog front end modules.

Manner 2: Being negotiated by the primary analog front end module and the secondary analog front end module.

The plurality of analog front end modules may exchange a message in a link initialization establishment process, and negotiate a primary analog front end module and a secondary analog front end module.

Optionally, after the negotiation, the primary analog front end module may send information to the common module to notify the common module that the primary analog front end module itself is a primary analog front end module.

Manner 3: Being determined based on a sequence of establishing links between the analog front end modules and the receiving chips.

For example, an analog front end module that is the first to establish a link connection to a receiving chip is a primary analog front end module. Certainly, an analog front end module that is the last to establish a link connection to a receiving chip may alternatively be a primary analog front end module. Alternatively, the second or the third analog front end module that establishes a link connection to a receiving chip is a primary analog front end module.

In an example, it is specified that when any analog front end module establishes a link connection to a receiving chip, the analog front end module sends a message to another analog front end module (or may send a message to the common module) to notify that the analog front end module has established a link connection to a receiving chip, and notify a time point for establishing the link connection. In this way, all analog front end modules (or may include the common module) may determine which analog front end module is a primary analog front end module based on time points for establishing link connections. In another example, it is specified that an analog front end module that is the first to establish a link connection to a receiving chip sends a message to another analog front end module (or may send a message to the common module) when the link connection to the receiving chip is established, to notify that the analog front end module itself has established a link connection to a receiving chip. In this manner, which analog front end module is a primary analog front end module may also be determined.

Manner 4: Being determined based on priorities of the receiving chips respectively connected to the plurality of analog front end modules.

For example, the plurality of analog front end modules notify each other of a priority of a receiving chip connected to the analog front end module. In the plurality of receiving chips, an analog front end module connected to a receiving chip with a highest priority is a primary analog front end module, and analog front end modules connected to remaining receiving chips are secondary analog front end modules.

Optionally, the plurality of analog front end modules each may exchange a message with the receiving chip in a link initialization establishment process, to obtain a priority of the receiving chip connected to the analog front end module. The priority of the receiving chip is usually pre-configured.

In addition, it may be understood that the common module needs to know which analog front end module is a primary analog front end module. For example, before delivery, the administrator configures an identifier of the primary analog front end module in the common module. For example, the primary analog front end module sends information to the common module, to notify the common module that the primary analog front end module itself is a primary analog front end module. For another example, the secondary analog front end module sends information to the common module, to notify the common module of which analog front end module is a primary analog front end module.

Optionally, the primary analog front end module may further notify a receiving chip connected to the primary analog front end module that the analog front end module itself is a primary analog front end module. Optionally, the secondary analog front end module may notify a receiving chip connected to the secondary analog front end module that the analog front end module itself is a secondary analog front end module. For a receiving chip, when the receiving chip learns that an analog front end module connected to the receiving chip is a primary analog front end module, the receiving chip may determine that the receiving chip itself is a primary receiving chip.

The following describes the forward transmission clock of the sending chip.

It should be noted that, in this application, a transmission clock used by the sending chip to send information to the receiving chip is defined as a forward transmission clock, that is, the forward transmission clock is used to control the sending chip to transmit information to the receiving chip. A transmission clock used by the receiving chip to send information to the sending chip is defined as a backward transmission clock, that is, the backward transmission clock is used to control the receiving chip to transmit information to the sending chip. In this application, determining (synchronizing) a transmission clock includes but is not limited to determining (synchronizing) a frequency and/or a phase of the transmission clock.

Forward transmission clocks used by all analog front end modules in the sending chip during sending of information may be different. When forward transmission clocks are different, an independent clock circuit, an independent component (for example, a phase-locked loop PLL), and the like may need to be set for each analog front end module. This increases power consumption of the sending device, and the sending chip occupies large space in the sending device. To reduce power consumption and a volume, all analog front end modules in the sending chip use a same forward transmission clock during sending of information. When the primary analog front end module and the secondary analog front end module are divided, a forward transmission clock used by the secondary analog front end module to send the third information is the same as a forward transmission clock used by the primary analog front end module to send the third information.

This application includes but is not limited to any one of the following manners for determining a forward transmission clock.

Manner 1: The forward transmission clock is determined based on a clock circuit in the sending chip.

A clock circuit is set in the sending chip, and the sending chip may generate a forward transmission clock based on the clock circuit for use by any analog front end module, or generate a plurality of forward transmission clocks for use by a plurality of analog front end modules.

Manner 2: The forward transmission clock is determined based on a backward transmission clock used by the receiving chip.

For example, an HCP device is usually connected to a plurality of cameras. To ensure synchronous transmission of the plurality of cameras, a receiving chip on an HCP device side usually provides a backward transmission clock of the receiving chip for a sending chip on a camera side through backward transmission. The sending chip on the camera side may generate a forward transmission clock based on the backward transmission clock. For example, the forward transmission clock is the same as the backward transmission clock, or the backward transmission clock may be improved to obtain the forward transmission clock.

In actual application, the plurality of receiving chips connected to the sending chip may work at the same time, or only some of the receiving chips may work. It is possible that only the primary receiving chip works, or the primary receiving chip and the secondary receiving chip work at the same time.

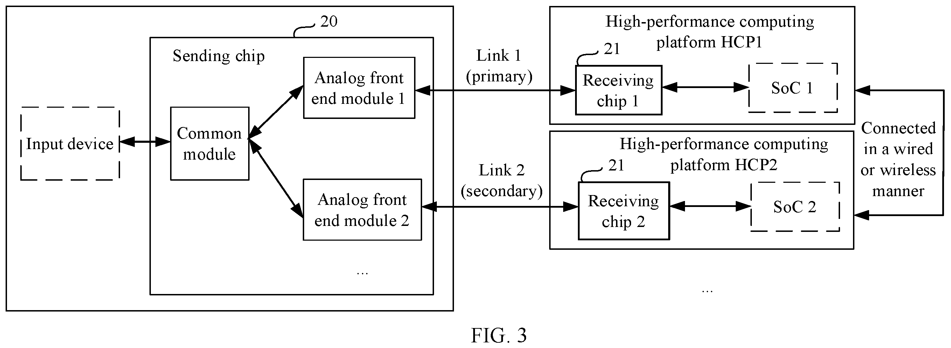

As shown in FIG. 3 (same parts as those in FIG. 2 are not described again), the following describes a manner of determining a forward transmission clock when different receiving chips work.

When only an HCP device 1 works, a receiving chip 1 (the primary receiving chip) performs backward transmission clock synchronization with an analog front end module 1 (the primary analog front end module) in the sending chip through a link 1 (the primary link). A forward transmission clock used by the analog front end module 1 to send information to the receiving chip 1 (that is, the link 1) is determined based on a backward transmission clock of the receiving chip 1.

When only an HCP device 2 works, a receiving chip 2 (the secondary receiving chip) performs backward transmission clock synchronization with an analog front end module 2 (the secondary analog front end module) in the sending chip through a link 2 (the secondary link). A forward transmission clock used by the analog front end module 2 to send information to the receiving chip 2 (that is, the link 2) is determined based on a backward transmission clock of the receiving chip 2.

When both the HCP device 1 and the HCP device 2 work, the receiving chip 1 performs backward transmission clock synchronization with the analog front end module 1. Optionally, the receiving chip 2 may also perform backward transmission clock synchronization with the analog front end module 2. However, a forward transmission clock used by the analog front end module 1 to send information to the receiving chip 1 (that is, the link 1) is determined based on a backward transmission clock of the receiving chip 1. In addition, a forward transmission clock used by the analog front end module 2 to send information to the receiving chip 2 (that is, the link 2) is determined based on the backward transmission clock of the receiving chip 1. That is, the forward transmission clock is determined based on the backward transmission clock obtained by the primary analog front end module.

The following describes the backward transmission clock of the receiving chip.

As shown in FIG. 3 (same parts as those in FIG. 2 are not described again), backward transmission clocks of at least two receiving chips connected to one sending chip may not be limited. When a difference between backward transmission clocks of HCP devices is large, for the sending chip on the camera side, an independent clock circuit, an independent component (for example, a phase-locked loop PLL), and the like need to be set for each analog front end module. This increases power consumption of the sending device, and the sending chip occupies large space in the sending device. To reduce power consumption and a volume, a difference between backward transmission clocks of any two of the at least two receiving chips is less than a first preset value, and the backward transmission clock is configured to control the receiving chip to transmit information to the sending chip.

The difference between the backward transmission clocks of any two receiving chips may be a difference or a ratio of related parameters of backward transmission clocks of any two receiving chips, and the related parameters include but are not limited to a clock frequency, a phase, and the like.

The first preset value may be, for example, a difference of 50 ppm or 100 ppm. In addition, the first preset value may be a relative clock difference, or may be an absolute clock difference. Optionally, the absolute clock may use a globally synchronized clock as a reference.

This application includes but is not limited to any one of the following manners for enabling the difference between the backward transmission clocks of any two receiving chips to be less than the first preset value.

Manner 1: A crystal oscillator difference between any two of the at least two receiving chips is less than a second preset value.

For example, crystal oscillators meeting a specific precision requirement are selected for the HCP 1 device and the HCP 2 device, and an error of the crystal oscillators is controlled within a specific range, that is, less than the second preset value. The second preset value may be, for example, 50 ppm or 100 ppm.

Manner 2: The devices to which the at least two receiving chips belong perform clock synchronization, where an absolute time difference does not exceed a third preset value. As shown in FIG. 3 (same parts as FIG. 2 are not described again), for example, backward transmission clock synchronization is performed between the device HCP 1 (which may be specifically an ECU 1 in the device HCP 1) to which the receiving chip 1 belongs and the device HCP 2 (which may be specifically an ECU 2 in the device HCP 1) to which the receiving chip 2 belongs. For example, HCP 1 and HCP 2 are connected in a wired manner, and the backward transmission clock synchronization may be performed through a wired link. The third preset value may be, for example, ±1.5 µs.

For example, at least two HCP devices are connected through Ethernet (Ethernet, ETH).

It is described above that the common module may perform processing such as interleaving and precoding on the first information, and a parameter used by the common module to process the first information is referred to as a first parameter.

The common module is configured to process the first information based on the first parameter. The first parameter may be determined by any one of the plurality of receiving chips connected to the sending chip. For example, the first parameter is determined by the primary chip. To prevent interference and receive processing error propagation, and ensure transmission quality, the first parameter may be determined by the primary receiving chip based on a processing capability of a channel. The primary receiving chip is connected to the primary analog front end module. That is, the primary receiving chip is further configured to send indication information of the first parameter to the primary analog front end module; and the primary analog front end module is further configured to send the indication information of the first parameter received from the primary receiving chip to the common module, where the first parameter is used to process the first information received by the common module.

The first parameter may be used for digital processing, and optionally, may also be used for analog processing. The first parameter includes but is not limited to a parameter used for interleaving processing and/or a parameter used for precoding processing.

For example, an encoding and decoding submodule is set in the common module, and the encoding and decoding submodule processes the first information based on the first parameter.

The following describes several examples in which the common module obtains the first parameter.

In a specific example, the primary receiving chip may send the indication information of the first parameter to the primary analog front end module, and then the primary analog front end module sends the indication information of the first parameter to the common module. The secondary receiving chip does not need to send the indication information of the first parameter to the secondary analog front end module. As described above, the primary analog front end module may notify the receiving chip that the analog front end module itself is a primary analog front end module, so that the receiving chip may determine that the receiving chip itself is a primary receiving chip.

In another specific example, any receiving chip may send the indication information of the first parameter to the analog front end module connected to the receiving chip, and then the primary analog front end module sends the indication information of the first parameter to the common module. The secondary analog front end module does not need to send the indication information of the first parameter to the common module.

In another specific example, any receiving chip may send the indication information of the first parameter to an analog front end module connected to the receiving chip, and then the primary analog front end module and the secondary analog front end module send the indication information of the first parameter obtained by the receiving chip and the secondary analog front end module each to the common module separately. The common module may determine the first parameter based on the indication information that is of the first parameter and that is sent by the primary analog front end module, or may determine the first parameter based on the indication information that is of the first parameter and that is sent by the secondary analog front end module.

The indication information of the first parameter described above may be a first parameter value, or may be an index of the first parameter, for example, a precoding coding scheme index.

The foregoing describes several examples in which the common module obtains the first parameter. The first parameter is determined by a receiving chip (for example, a primary receiving chip) in a plurality of receiving chips, and another receiving chip should also know the first parameter, so that processing such as decoding is performed based on the first parameter. An example in which the first parameter is the primary analog front end module is used to describe several examples in which the secondary receiving chip obtains the first parameter.

In Example 1, the primary analog front end module may send the indication information of the first parameter to the secondary analog front end module, and the secondary analog front end module then sends the indication information of the first parameter to the secondary receiving chip.

In Example 2, the primary receiving chip sends the indication information of the first parameter to the secondary receiving chip.

In conclusion, it can be learned that the first parameter configuration corresponding to the primary link is used as the first parameter configuration corresponding to the secondary link.

The following describes several application scenarios of notifying the first parameter with reference to a sequence of establishing a link between the analog front end module and the receiving chip.

Scenario 1: The primary link is established before the secondary link is established.

In this scenario, the foregoing example 1 or the foregoing example 2 may be used.

At an initial stage of establishing the link with the receiving chip, the analog front end module may first perform debugging training on the established link. In Example 1, the primary analog front end module may notify the secondary analog front end module of the indication information of the first parameter by using an info message during modulation training of the secondary link. In the example 2, the primary receiving chip may notify the secondary receiving chip of the indication information of the first parameter by using an info message during modulation training of the secondary link.

Scenario 2: The secondary link is established before the primary link is established.

After the secondary link is established, the common module first performs information processing by using the first parameter determined by the secondary receiving chip. Later, the primary analog front end module of the sending chip finds that the primary receiving chip is powered on, and the primary analog front end module establishes a link connection to the primary receiving chip. The primary receiving chip determines the indication information of the first parameter, and sends the indication information to the primary analog front end module. The primary analog front end module may notify the common module and the secondary analog front end module of the indication information of the first parameter determined by the primary receiving chip. The common module no longer uses the first parameter determined by the secondary analog front end module to perform information processing, but uses the first parameter determined by the primary analog front end module to perform information processing. In addition, the secondary link between the secondary analog front end module and the secondary receiving chip needs to be re-debugged and trained according to the first parameter of the primary link.

During remodulation training of the secondary link, the primary link may work normally or may be suspended. After the secondary link completes modulation, the primary link and the secondary link work simultaneously.

In an example, the data transmission system in this application may support retransmission scheduling. The following describes retransmission scheduling. In actual application, a data block sent by the analog front end module to the receiving chip may fail to be transmitted. Based on this, the sending chip may retransmit the data block that fails to be transmitted. During retransmission, the analog front end module may send retransmission control information to the common module, where the retransmission control information may be used to retransmit the data block that fails to be transmitted by the analog front end module. For example, the retransmission control information includes an identifier of the data block that fails to be transmitted by the analog front end module. The common module reprocesses information from the input device based on the retransmission control information to obtain a new data block, and sends the new data block to the analog front end module, so that the analog front end module retransmits the data block to the receiving chip. In addition, optionally, a retransmission scheduling submodule may be set in the common module, where the retransmission scheduling submodule is configured to perform retransmission scheduling.

There are a plurality of links between the sending chip and the receiving chip, and data blocks that fail to be transmitted on different links may be different. For example, data blocks that fail to be transmitted on a link 1 are a data block 3 and a data block 5, and data blocks that fail to be transmitted on a link 2 are a data block 3 and a data block 4. During retransmission, there are the following retransmission manners.

For example, based on retransmission requirements of the plurality of links, the data block 3 and the data block 5 are retransmitted on the link 1, and the data block 3 and the data block 4 are retransmitted on the link 2. This manner increases processing complexity of the common module.

For example, the data block 3, the data block 4, and the data block 5 are retransmitted on both the link 1 and the link 2. However, for the link 1, the data block 4 does not need to be retransmitted; and for the link 2, the data block 5 does not need to be retransmitted. Retransmission of a data block that has been successfully transmitted occupies bandwidth, and increases processing complexity.

For example, retransmission is performed based on primarily meeting a retransmission requirement of any link. For example, based on primarily meeting a transmission requirement of the primary link, the data block 3 and the data block 5 that fail to be transmitted on the primary link are retransmitted on the primary link, and the data block 3 and the data block 5 that fail to be transmitted on the primary link are also retransmitted on the secondary link. Based on this, it can be learned that the common module is further configured to perform retransmission scheduling, where the retransmission scheduling is determined based on a transmission requirement of the primary receiving chip (that is, the primary link), and the primary receiving chip is connected to the primary analog front end module. For example, the common module receives the retransmission control information transmitted by the primary analog front end module, where the retransmission control information is used to retransmit the data block that fails to be transmitted by the primary analog front end module. Optionally, the data block that fails to be transmitted by the primary analog front end module is sent by the primary analog front end module and the secondary analog front end module. To be specific, the secondary analog front end module also retransmits the data block that fails to be transmitted by the primary analog front end module.

In an actual application, the HCP device may perform processing such as parameter configuration, parameter adjustment, online upgrade, and online diagnosis on the camera. Parameter control performed by a receiving device (for example, an HCP device) on a sending device (for example, a camera) may be defined as backward control. For example, the receiving chip sends indication information of a second parameter to the analog front end module in the sending chip, where the second parameter is used to control the input device (the input device is located in the sending device), and the receiving chip may obtain the indication information of the second parameter from the system-on-a-chip (SoC) connected to the receiving chip. The common module may send the indication information of the second parameter (for example, send the indication information of the second parameter to the input device).

In an example, backward control performed by the receiving device on the sending device may be performed by only one of the receiving devices, and control performed by another receiving device is invalid.

In an example, a plurality of receiving devices perform division of work, to respectively control some backward control parameters of the sending device. For example, one HCP device controls a high-dynamic range image (high-dynamic range, HDR) parameter of a camera, and another HCP device controls a synchronous imaging shooting trigger parameter of the camera. For another example, one receiving device serves as a primary control device to control some backward functions of the sending device, for example, parameter configuration, parameter adjustment, partial online upgrade, and partial online diagnosis. Another receiving device, as a secondary control device has only several functions, for example, supports only partial online upgrade and partial online diagnosis.

In conclusion, when the primary and secondary analog front end modules (that is, the primary and secondary receiving chips) are divided, the primary receiving chip is further configured to send the indication information of the second parameter to the primary analog front end module. The primary analog front end module is further configured to send the indication information of the second parameter received from the primary receiving chip to the common module, where the second parameter is used to control the input device. The common module is further configured to send the indication information of the second parameter (for example, send the indication information of the second parameter to the input device), where the indication information of the second parameter is from the primary receiving chip, the primary receiving chip is connected to the primary analog front end module, and the second parameter is used to control the input device.

For example, a control parameter transmission submodule is set in the common module, and the control parameter transmission submodule is configured to send the indication information of the second parameter to the input device.

The foregoing describes parameter control performed by the receiving chip to the sending chip. In this application, data transmitted by the receiving chip to the sending chip is defined as backward transmission data. The sending chip may receive, by using different analog front end modules, backward transmission data sent by different receiving chips (for example, AFE1 and AFE2 respectively receive backward transmission data on the link 1 and backward transmission data on the link 2), and parse the backward transmission data by using the common module. The following describes three backward receiving processing mechanisms.
(a) When only one link is working, the common module receives and processes backward transmission data on the link.
(b) When a plurality of links work at the same time, backward transmission data on the links is processed at the same time. When a conflict occurs, a requirement of the primary link is met primarily. For example, retransmitted data blocks are different, or the HCP 1 device requires a long exposure time while the HCP 2 device requires a high frame rate, and there is a conflict between the two requirements.
(c) When a plurality of links work at the same time, only backward transmission data on the primary link is processed.

In this application, a one-to-multiple sending chip structure including a common module and independent analog front end modules is used to cooperate with transmission clock synchronization, backward control parameter synchronization, and the like, to reduce power consumption and a volume of the sending chip.

In an example, this application provides an electronic device, including the sending chip described above.

Based on the same inventive concept, this application provides a data transmission method. A problem-resolving principle of the method is similar to that of the data transmission system, and technical effects generated by the method are also similar to technical effects generated by the data transmission system, and mutual reference may be made for the method and the data transmission system.

The method is applied to a transmitting apparatus, and the electronic device includes a common module and a plurality of analog front end AFE modules.

First, the common module receives first information, processes the first information to obtain second information, and sends the second information to at least two of the plurality of analog front end modules separately.

Then, the analog front end module processes the second information to obtain third information, and sends the third information.

In an example, the common module may perform digital processing on the first information to obtain the second information; or perform digital processing and analog processing on the first information to obtain the second information.

In an example, a primary analog front end module and a secondary analog front end module may be determined based on pre-configuration, or priorities of receiving apparatuses respectively connected to the plurality of analog front end modules, or a sequence of establishing links between the analog front end modules and the receiving apparatuses.

In an example, a forward transmission clock used by the secondary analog front end module to send the third information is the same as a forward transmission clock used by the primary analog front end module to send the third information.

In an example, the forward transmission clock is determined based on a clock circuit in the transmitting apparatus.

In an example, the forward transmission clock is determined based on a backward transmission clock obtained by the primary analog front end module.

In an example, a primary receiving apparatus sends indication information of a first parameter to the primary analog front end module. The primary analog front end module may further receive the indication information that is of the first parameter and that is sent by the primary receiving apparatus, and send the indication information of the first parameter to the common module, where the primary receiving apparatus is connected to the primary analog front end module. When processing the first information, the common module may process the first information based on the first parameter.

In an example, the common module may further perform retransmission scheduling, where the retransmission scheduling is determined based on a transmission requirement of the primary receiving apparatus, and the primary receiving apparatus is connected to the primary analog front end module.

In an example, the primary receiving apparatus sends indication information of a second parameter to the primary analog front end module. The primary analog front end module may further receive the indication information of the second parameter sent by the primary receiving apparatus, and send the indication information of the second parameter to the common module. Then, the common module sends the indication information of the second parameter, where the second parameter is used to control an input device.

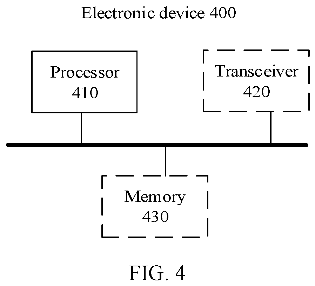

As shown in FIG. 4, an electronic device 400 is provided. The electronic device 400 may include a processor 410, and optionally, further includes a transceiver 420 and a memory 430. The transceiver 420 may be configured to receive a program or instructions and transmit the program or the instructions to the processor 410. Alternatively, the transceiver 420 may be configured to perform communication and interaction between the apparatus 400 and another communications device, for example, exchange control signaling and/or service data. The transceiver 420 may be a code and/or data read/write transceiver, or the transceiver 420 may be a signal transmission transceiver between a processor and a transceiver. The processor 410 and the memory 430 are electrically coupled.

For example, the memory 430 is configured to store a computer program or instructions. The processor 410 may be configured to invoke the computer program or the instructions stored in the memory 430, to perform the method performed by the electronic device in the foregoing example, or perform, by using the transceiver 420, the method performed by the electronic device in the foregoing example.

This application provides a computer-readable storage medium, configured to store a computer program, where the computer program includes instructions used to implement the foregoing data transmission method.

Alternatively, a computer-readable storage medium is provided, and is configured to store a computer program or instructions. When the computer program or the instructions are executed, the method performed by the electronic device in the foregoing data transmission method is implemented.

This application provides a computer program product. The computer program product includes computer program code. When the computer program code is run on a computer, the method performed by the electronic device in the foregoing data transmission method is implemented.

In addition, the processor mentioned in embodiments of this application may be a central processing unit (central processing unit, CPU) or a baseband processor. The baseband processor and the CPU may be integrated or separated, or may be a network processor (network processor, NP) or a combination of a CPU and an NP. The processor may further include a hardware chip or another general-purpose processor. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL) and another programmable logic device, a discrete gate or a transistor logic device, a discrete hardware component, or the like, or any combination thereof. The general-purpose processor may be a microprocessor, or the processor may be any conventional processor or the like.

The memory in embodiments of this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), which is used as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory described in this application is intended to include but is not limited to these memories and any memory of another appropriate type.

The transceiver mentioned in embodiments of this application may include a separate transmitter and/or a separate receiver, or the transmitter and the receiver may be integrated. The transceiver may work based on an indication of a corresponding processor. Optionally, the transmitter may correspond to a transmitter machine in a physical device, and the receiver may correspond to a receiver machine in the physical device.

Persons of ordinary skill in the art may be aware that, in combination with the examples described in embodiments disclosed in this specification, method steps and units may be implemented by electronic hardware, computer software, or a combination thereof. To clearly describe the interchangeability between the hardware and the software, the foregoing has generally described steps and compositions of each embodiment according to functions. Whether the functions are performed by hardware or software depends on particular applications and design constraint conditions of the technical solutions. Persons of ordinary skill in the art may use different methods to implement the described functions for each particular application, but it should not be considered that the implementation goes beyond the scope of the appended claims.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments in this application.

In addition, function units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in this application essentially, or the part contributing to the conventional technology, or all or a part of the technical solutions may be implemented in a form of a software product. The computer software product is stored in a storage medium and includes several instructions for instructing a computer device to perform all or a part of the steps of the methods in embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The term "and/or" in this application describes an association relationship for describing associated objects and represents that three relationships may exist. For example, A and/or B may represent the following three cases: Only A exists, both A and B exist, and only B exists. The character "/" generally indicates an "or" relationship between the associated objects. "A plurality of" in this application means two or more. In addition, it should be understood that in description of this application, terms such as "first" and "second" are merely used for distinguishing and description, but should not be understood as indicating or implying relative importance, or should not be understood as indicating or implying a sequence.

Although some preferred embodiments of this application have been described, persons skilled in the art can make changes and modifications to these embodiments once they learn the basic inventive concept. Therefore, the following claims are intended to be construed as covering the preferred embodiments and all changes and modifications falling within the scope of these claims.

## Claims

1. A data transmission method, applied to a transmitting apparatus (20) of a vehicle, wherein the transmitting apparatus (20) comprises a common module and a plurality of analog front end**,** AFE, modules, and the data transmission method comprises:
receiving, by the common module, first information, processing the first information to obtain second information, and sending the second information to at least two of the plurality of analog front end modules separately; and
processing, by each of the at least two analog front end modules, the second information to obtain third information, and sending the third information to a receiving apparatus (21),
wherein the first information is image data information, control information or audio data information received from an input device provided at the vehicle,
wherein the processing the second information comprises performing, each of the at least two analog front end modules analog processing on the second information,
wherein the receiving apparatus (21) is a high-performance computing platform, HCP**,**
wherein the processing the first information to obtain second information comprises:
performing digital processing on the first information to obtain the second information; or
performing digital processing and analog processing on the first information to obtain the second information.

2. The method according to claim 1, further comprising:
Determining a primary analog front end module and a secondary analog front end module based on pre-configuration, or priorities of receiving apparatuses comprising the receiving apparatus (21), the receiving apparatuses being HCPs and being respectively connected to the plurality of analog front end modules, or a sequence of establishing links between the analog front end modules and the receiving apparatuses.

3. The method according to claim 1 or 2, wherein a forward transmission clock used by the secondary analog front end module to send the third information is the same as a forward transmission clock used by the primary analog front end module to send the third information.

4. The method according to claim 3, wherein the forward transmission clock is determined based on a clock circuit in the transmitting apparatus (20).

5. The method according to claim 3, wherein the forward transmission clock is determined based on a backward transmission clock obtained by the primary analog front end module.

6. The method according to any one of claims 2 to 5, wherein the receiving apparatuses comprise a primary receiving apparatus connected to the primary analog front end module, and wherein the method further comprises:
receiving, by the primary analog front end module, indication information of a first parameter sent by the primary receiving apparatus, and sending the indication information of the first parameter to the common module; and
the processing the first information comprises: processing the first information based on the first parameter,
wherein the first parameter includes a parameter used for interleaving processing and/or a parameter used for precoding processing.

7. The method according to any one of claims 2 to 6, further comprising:
performing, by the common module, retransmission scheduling, wherein the retransmission scheduling is determined based on a transmission requirement of the primary receiving apparatus, and the primary receiving apparatus is connected to the primary analog front end module.

8. The method according to any one of claims 2 to 7, further comprising:
receiving, by the primary analog front end module, indication information of a second parameter sent by the primary receiving apparatus, and sending the indication information of the second parameter to the common module; and
sending, by the common module, the indication information of the second parameter, wherein the second parameter is used to control the input device.

9. A transmitting apparatus (20), comprising a common module and a plurality of analog front end AFE modules, wherein the transmitting apparatus (20) is configured to perform the method according to any one of claims 1 to 8.

10. A data transmission system, comprising the transmitting apparatus (20) according to claim 9, and at least two receiving apparatuses, wherein
the transmitting apparatus (20) and the receiving apparatus (21) are connected in a wired manner, and different analog front end modules in the transmitting apparatus (20) are connected to different receiving apparatuses.

11. The system according to claim 10, wherein a difference between backward transmission clocks of any two of the at least two receiving apparatuses is less than a first preset value; and the backward transmission clock is used to control the receiving apparatus (21) to transmit information to the transmitting apparatus (20).

12. The system according to claim 10 or 11, wherein a crystal oscillator difference between any two of the at least two receiving apparatuses is less than a second preset value, wherein the second preset value is 50ppm or 100ppm; or
devices to which the at least two receiving apparatuses belong perform clock synchronization.

13. The system according to claim 10 or 11, wherein a primary receiving apparatus connected to a primary analog front end module is further configured to send indication information of a first parameter to the primary analog front end module, wherein the first parameter includes a parameter used for interleaving processing and/or a parameter used for precoding processing;
the primary analog front end module is further configured to send the received indication information of the first parameter to the common module; and
the common module is specifically configured to process the first information based on the first parameter.

14. A computer program product, wherein the computer program product comprises computer program code, and when the computer program code is run on a computer in a vehicle, the method according to any one of claims 1 to 8 is implemented.

15. A computer-readable storage medium, wherein the storage medium stores a computer program or instructions, and when the computer program or the instructions are executed by a computer in a vehicle, the method according to any one of claims 1 to 8 is implemented.

## Patentansprüche

1. Datenübertragungsverfahren, das auf eine übertragende Vorrichtung (20) eines Fahrzeugs angewendet wird, wobei die übertragende Vorrichtung (20) ein gemeinsames Modul und eine Vielzahl von analogen Frontend-Modulen, AFE-Modulen, umfasst, und das Datenübertragungsverfahren Folgendes umfasst:
Empfangen erster Informationen durch das gemeinsame Modul, Verarbeiten der ersten Informationen, um zweite Informationen zu erlangen, und separates Senden der zweiten Informationen an mindestens zwei der Vielzahl von analogen Frontend-Modulen; und
Verarbeiten der zweiten Informationen durch jedes der mindestens zwei analogen Frontend-Module, um dritte Informationen zu erlangen, und Senden der dritten Informationen an eine empfangende Vorrichtung (21),
wobei die ersten Informationen Bilddateninformationen, Steuerinformationen oder Audiodateninformationen sind, die aus einer an dem Fahrzeug bereitgestellten Eingabeeinrichtung empfangen werden,
wobei das Verarbeiten der zweiten Informationen das Durchführen von analogem Verarbeiten an den zweiten Informationen durch jedes der mindestens zwei analogen Frontend-Module umfasst,
wobei die Empfangsvorrichtung (21) eine Hochleistungsrechenplattform, HCP, ist,
wobei das Verarbeiten der ersten Informationen, um zweite Informationen zu erlangen, Folgendes umfasst:
Durchführen von digitalem Verarbeiten an den ersten Informationen, um die zweiten Informationen zu erlangen; oder
Durchführen von digitalem Verarbeiten und analogem Verarbeiten an den ersten Informationen, um die zweiten Informationen zu erlangen.

2. Verfahren nach Anspruch 1, ferner umfassend:
Bestimmen eines primären analogen Frontend-Moduls und eines sekundären analogen Frontend-Moduls basierend auf einer Vorkonfiguration oder von Prioritäten von empfangenden Vorrichtungen, umfassend die empfangende Vorrichtung (21), wobei die empfangenden Vorrichtungen HCPs sind und jeweils mit der Vielzahl von analogen Frontend-Modulen verbunden sind, oder einer Sequenz von herstellenden Verknüpfungen zwischen den analogen Frontend-Modulen und den empfangenden Vorrichtungen.

3. Verfahren nach Anspruch 1 oder 2, wobei ein Vorwärtsübertragungstakt, der durch das sekundäre analoge Frontend-Modul verwendet wird, um die dritten Informationen zu senden, derselbe wie ein Vorwärtsübertragungstakt ist, der durch das primäre analoge Frontend-Modul verwendet wird, um die dritten Informationen zu senden.

4. Verfahren nach Anspruch 3, wobei der Vorwärtsübertragungstakt basierend auf einer Taktschaltung in der übertragenden Vorrichtung (20) bestimmt wird.

5. Verfahren nach Anspruch 3, wobei der Vorwärtsübertragungstakt basierend auf einem Rückwärtsübertragungstakt bestimmt wird, der durch das primäre analoge Frontend-Modul erlangt wird.

6. Verfahren nach einem der Ansprüche 2 bis 5, wobei die empfangenden Vorrichtungen eine primäre empfangende Vorrichtung umfassen, die mit dem primären analogen Frontend-Modul verbunden ist, und wobei das Verfahren ferner Folgendes umfasst:
Empfangen von Anzeigeinformationen eines ersten Parameters, die durch die primäre empfangende Vorrichtung gesendet werden, durch das primäre analoge Frontend-Modul und Senden der Anzeigeinformationen des ersten Parameters an das gemeinsame Modul; und
das Verarbeiten der ersten Informationen Folgendes umfasst:
Verarbeiten der ersten Informationen basierend auf dem ersten Parameter,
wobei der erste Parameter einen Parameter, der zum Verschachtelungsverarbeiten verwendet wird, und/oder einen Parameter, der zum Vorcodierungsverarbeiten verwendet wird, beinhaltet.

7. Verfahren nach einem der Ansprüche 2 bis 6, ferner umfassend: Durchführen einer Neuübertragungsplanung durch das gemeinsame Modul, wobei die Neuübertragungsplanung basierend auf einer Übertragungsanforderung der primären empfangenden Vorrichtung bestimmt wird, und die primäre empfangende Vorrichtung mit dem primären analogen Frontend-Modul verbunden ist.

8. Verfahren nach einem der Ansprüche 2 bis 7, ferner umfassend:
Empfangen von Anzeigeinformationen eines zweiten Parameters, die durch die primäre empfangende Vorrichtung gesendet werden, durch das primäre analoge Frontend-Modul und Senden der Anzeigeinformationen des zweiten Parameters an das gemeinsame Modul; und
Senden der Anzeigeinformationen des zweiten Parameters durch das gemeinsame Modul, wobei der zweite Parameter verwendet wird, um die Eingabeeinrichtung zu steuern.

9. Übertragende Vorrichtung (20), umfassend ein gemeinsames Modul und eine Vielzahl von analogen Frontend-Modulen, AFE-Modulen, wobei die übertragende Vorrichtung (20) dazu konfiguriert ist, das Verfahren nach einem der Ansprüche 1 bis 8 durchzuführen.

10. Datenübertragungssystem, umfassend die übertragende Vorrichtung (20) nach Anspruch 9 und mindestens zwei empfangende Vorrichtungen, wobei
die übertragende Vorrichtung (20) und die empfangende Vorrichtung (21) kabelgebunden verbunden sind, und unterschiedliche analoge Frontend-Module in der übertragenden Vorrichtung (20) mit unterschiedlichen empfangenden Vorrichtungen verbunden sind.

11. System nach Anspruch 10, wobei eine Differenz zwischen Rückwärtsübertragungstakten von zwei beliebigen der mindestens zwei empfangenden Vorrichtungen kleiner als ein erster voreingestellter Wert ist; und der Rückwärtsübertragungstakt verwendet wird, um die empfangende Vorrichtung (21) zu steuern, um Informationen an die übertragenden Vorrichtung (20) zu übertragen.

12. System nach Anspruch 10 oder 11, wobei eine Kristalloszillatordifferenz zwischen zwei beliebigen der mindestens zwei empfangenden Vorrichtungen kleiner als ein zweiter voreingestellter Wert ist, wobei der zweite voreingestellte Wert 50 ppm oder 100 ppm ist; oder
Einrichtungen, zu welchen die mindestens zwei empfangenden Vorrichtung gehören, eine Taktsynchronisation durchführen.

13. System nach Anspruch 10 oder 11, wobei eine primäre empfangende Vorrichtung, die mit einem primären analogen Frontend-Modul verbunden ist, ferner dazu konfiguriert ist, Anzeigeinformationen eines ersten Parameters an das primäre analoge Frontend-Modul zu senden, wobei der erste Parameter einen Parameter, der zum Verschachtelungsverarbeiten verwendet wird, und/oder einen Parameter, der zum Vorcodierungsverarbeiten verwendet wird, beinhaltet;
das primäre analoge Frontend-Modul ferner dazu konfiguriert ist, die empfangenen Anzeigeinformationen des ersten Parameters an das gemeinsame Modul zu senden; und
das gemeinsame Modul speziell dazu konfiguriert ist, die ersten Informationen basierend auf dem ersten Parameter zu verarbeiten.

14. Computerprogrammprodukt, wobei das Computerprogrammprodukt einen Computerprogrammcode umfasst und, wenn der Computerprogrammcode auf einem Computer in einem Fahrzeug ausgeführt wird, das Verfahren nach einem der Ansprüche 1 bis 8 implementiert wird.

15. Computerlesbares Speichermedium, wobei das Speichermedium ein Computerprogramm oder Anweisungen speichert und, wenn das Computerprogramm oder die Anweisungen durch einen Computer in einem Fahrzeug ausgeführt werden, das Verfahren nach einem der Ansprüche 1 bis 8 implementiert wird.

## Revendications

1. Procédé de transmission de données, appliqué à un appareil de transmission (20) d'un véhicule, dans lequel l'appareil de transmission (20) comprend un module commun et une pluralité de modules frontaux analogiques, AFE, et le procédé de transmission de données comprend :
la réception, par le module commun, de premières informations, le traitement des premières informations pour obtenir des deuxièmes informations, et l'envoi des deuxièmes informations à au moins deux de la pluralité de modules frontaux analogiques séparément ; et
le traitement, par chacun des au moins deux modules frontaux analogiques, des deuxièmes informations pour obtenir des troisièmes informations, et l'envoi des troisièmes informations à un appareil de réception (21),
dans lequel les premières informations sont des informations de données d'image, des informations de commande ou des informations de données audio reçues d'un dispositif d'entrée fourni au niveau du véhicule,
dans lequel le traitement des deuxièmes informations comprend la réalisation, par chacun des au moins deux modules frontaux analogiques, d'un traitement analogique sur les deuxièmes informations,
dans lequel l'appareil de réception (21) est une plateforme de calcul haute performance, HCP,
dans lequel le traitement des premières informations pour obtenir des deuxièmes informations comprend :
la réalisation d'un traitement numérique sur les premières informations pour obtenir les deuxièmes informations ; ou
la réalisation d'un traitement numérique et d'un traitement analogique sur les premières informations pour obtenir les deuxièmes informations.

2. Procédé selon la revendication 1, comprenant également : la détermination d'un module frontal analogique primaire et d'un module frontal analogique secondaire sur la base d'une préconfiguration, ou de priorités d'appareils de réception comprenant l'appareil de réception (21), les appareils de réception étant des HCP et étant respectivement connectés à la pluralité de modules frontaux analogiques, ou d'une séquence d'établissement de liens entre les modules frontaux analogiques et les appareils de réception.

3. Procédé selon la revendication 1 ou 2, dans lequel une horloge de transmission directe utilisée par le module frontal analogique secondaire pour envoyer les troisièmes informations est la même qu'une horloge de transmission directe utilisée par le module frontal analogique primaire pour envoyer les troisièmes informations.

4. Procédé selon la revendication 3, dans lequel l'horloge de transmission directe est déterminée sur la base d'un circuit d'horloge dans l'appareil de transmission (20).

5. Procédé selon la revendication 3, dans lequel l'horloge de transmission directe est déterminée sur la base d'une horloge de transmission inverse obtenue par le module frontal analogique primaire.

6. Procédé selon l'une quelconque des revendications 2 à 5, dans lequel les appareils de réception comprennent un appareil de réception primaire connecté au module frontal analogique primaire, et dans lequel le procédé comprend également :
la réception, par le module frontal analogique primaire, d'informations d'indication d'un premier paramètre envoyé par l'appareil de réception primaire, et l'envoi des informations d'indication du premier paramètre au module commun ; et
le traitement des premières informations comprend : le traitement des premières informations sur la base du premier paramètre,
dans lequel le premier paramètre comporte un paramètre utilisé pour le traitement d'entrelacement et/ou un paramètre utilisé pour le traitement de précodage.

7. Procédé selon l'une quelconque des revendications 2 à 6, comprenant également :
la réalisation, par le module commun, d'une planification de retransmission, dans lequel la planification de retransmission est déterminée sur la base d'une exigence de transmission de l'appareil de réception primaire, et l'appareil de réception primaire est connecté au module frontal analogique primaire.

8. Procédé selon l'une quelconque des revendications 2 à 7, comprenant également :
la réception, par le module frontal analogique primaire, d'informations d'indication d'un second paramètre envoyé par l'appareil de réception primaire, et l'envoi des informations d'indication du second paramètre au module commun ; et
l'envoi, par le module commun, des informations d'indication du second paramètre, dans lequel le second paramètre est utilisé pour commander le dispositif d'entrée.

9. Appareil de transmission (20), comprenant un module commun et une pluralité de modules frontaux analogiques AFE, dans lequel l'appareil de transmission (20) est configuré pour réaliser le procédé selon l'une quelconque des revendications 1 à 8.

10. Système de transmission de données, comprenant l'appareil de transmission (20) selon la revendication 9, et au moins deux appareils de réception, dans lequel
l'appareil de transmission (20) et l'appareil de réception (21) sont connectés de manière filaire, et différents modules frontaux analogiques dans l'appareil de transmission (20) sont connectés à différents appareils de réception.

11. Système selon la revendication 10, dans lequel une différence entre les horloges de transmission inverse de deux quelconques des au moins deux appareils de réception est inférieure à une première valeur prédéfinie ; et l'horloge de transmission inverse est utilisée pour commander l'appareil de réception (21) pour transmettre des informations à l'appareil de transmission (20).

12. Système selon la revendication 10 ou 11, dans lequel une différence d'oscillateur à cristal entre deux quelconques des au moins deux appareils de réception est inférieure à une seconde valeur prédéfinie, dans lequel la seconde valeur prédéfinie est de 50 ppm ou 100 ppm ; ou
les dispositifs auxquels appartiennent les au moins deux appareils de réception réalisent une synchronisation d'horloge.

13. Système selon la revendication 10 ou 11, dans lequel un appareil de réception primaire connecté à un module frontal analogique primaire est également configuré pour envoyer des informations d'indication d'un premier paramètre au module frontal analogique primaire, dans lequel le premier paramètre comporte un paramètre utilisé pour le traitement d'entrelacement et/ou un paramètre utilisé pour le traitement de précodage ;
le module frontal analogique primaire est également configuré pour envoyer les informations d'indication reçues du premier paramètre au module commun ; et
le module commun est spécifiquement configuré pour traiter les premières informations sur la base du premier paramètre.

14. Produit de programme informatique, dans lequel lorsque le produit de programme informatique comprend un code de programme informatique, et lorsque le code de programme informatique est exécuté sur un ordinateur dans un véhicule, le procédé selon l'une quelconque des revendications 1 à 8 est mis en œuvre.

15. Support de stockage lisible par ordinateur, dans lequel le support de stockage stocke un programme informatique ou des instructions, et lorsque le programme informatique ou les instructions sont exécutés par un ordinateur dans un véhicule, le procédé selon l'une quelconque des revendications 1 à 8 est mis en œuvre.
